Europäisches Patentamt

European Patent Office

Office européen des brevets

(11) Numéro de publication: **0 353 141**
A1

# (12) DEMANDE DE BREVET EUROPEEN

(21) Numéro de dépôt: **89402098.1**

(22) Date de dépôt: **25.07.89**

(51) Int. Cl.5: **B 32 B 17/10**
C 03 C 27/12

(30) Priorité: **27.07.88 FR 8810139**

(43) Date de publication de la demande:
**31.01.90 Bulletin 90/05**

(84) Etats contractants désignés:
**AT BE CH DE ES FR GB IT LI LU SE**

(71) Demandeur: **SAINT-GOBAIN VITRAGE**
**"Les Miroirs" 18, avenue d'Alsace**
**F-92400 Courbevoie (FR)**

(72) Inventeur: **Harmand, Hélène**
**116 Bld Voltaire**
**F-75011 Paris (FR)**

**Oudard, Jean-François**
**23 Avenue de Paris**
**F-94300 Vincennes (FR)**

**Bruneel, Dominique**
**8 Rue Augustin Thierry**
**F-75019 Paris (FR)**

(74) Mandataire: **Luzlau, Nelly et al**
**Saint Gobain Recherche 39, Quai Lucien Lefranc BP 135**
**F-93303 Aubervilliers Cédex (FR)**

(54) **Vitrage feuilleté à couche électro-conductrice.**

(57) La présente invention concerne un vitrage feuilleté à couche électro-conductrice pour véhicules, en particulier pour automobiles, et notamment un pare-brise.

Elle propose un vitrage dans lequel la couche est disposée en face 3, les faces d'un tel vitrage étant numérotées conventionnellement de 1 à 4 en allant de l'extérieur du vitrage lorsqu'il est monté sur un véhicule, vers l'intérieur.

Un tel vitrage améliore en particulier le désembuage.

EP 0 353 141 A1

## Description

## VITRAGE FEUILLETE A COUCHE ELECTRO-CONDUCTRICE

La présente invention concerne un vitrage feuilleté à couche électro-conductrice pour automobile ou en général pour véhicule, et plus particulièrement un pare-brise.

De tels vitrages comportant généralement deux plaques de verre associées grâce à une feuille intercalaire de plastique transparent du type P.V.B. (Butyral de polyvinyle) sont connus, mais presque toujours la couche électroconductrice est disposée sur la face interne de la plaque de verre la plus extérieure, c'est-à-dire la face 2, les faces d'un feuilleté à deux plaques de verre étant conventionnellement numérotées 1,2,3,4 en allant de l'extérieur du vitrage, c'est-à-dire du côté disposé à l'extérieur lorsque ce vitrage est monté dans une baie fermant un véhicule, vers l'intérieur.

Ainsi, le document de brevet EP 108616 de Donnelly Mirrors, propose un vitrage feuilleté à deux plaques de verre associées ayant sur la face 2 une couche électro-conductrice d'oxyde d'indium étain (ITO) déposée par une technique sous vide.

Le document de brevet US 4654067 de Ford propose également un même type de pare-brise avec la couche électro-conductrice en face 2.

Le même choix de la face 2 est fait dans le document de brevet US 2944926 de LOF.

D'autres documents de brevets pourraient encore être cités qui confirmeraient cette constance du choix de la face 2 pour disposer la couche électro-conductrice.

Un document de brevet, toutefois, EP 192009, envisage de disposer la couche électro-conductrice, une couche ITO, sur une face extérieure du vitrage feuilleté, donc la face 1 ou la face 4 pour permettre le traitement thermique réducteur de la couche par la flamme d'un brûleur qui n'échaufferait pratiquement que la couche, mais pas le verre et/ou l'intercalaire de P.V.B.

Excepté ce dernier exemple, la constance de disposition de la couche en face 2 ainsi rencontrée semble pouvoir se justifier par la nécessité de bomber le verre après qu'il soit revêtu et, pour minimiser les craquelures et en général la détérioration de la couche lors du bombage, il est préférable qu'elle soit du côté concave plutôt que du côté convexe du verre, sinon elle serait mise en extension, ce qui accroîtrait ses risques de détérioration.

En outre, ce choix quasi constant de la face 2 pour porter la couche électro-conductrice peut aussi s'expliquer par la plus grande difficulté de déposer une couche homogène par pulvérisation cathodique, avec une cathode plane sur une forme convexe où les bords sont à "l'ombre", plutôt que sur une face concave, la face 2 sur un pare-brise et en général un vitrage automobile, étant généralement concave.

Par ailleurs, on peut aussi penser pour expliquer ce choix quasi constant de la face 2 pour déposer la couche électro-conductrice, que l'on a cherché à faciliter le dégivrage d'un pare-brise en disposant ladite couche chauffante aussi près que possible de la face à dégivrer.

Cependant, si le dégivrage est peut-être amélioré par cette disposition de la couche en face 2, il n'en est pas de même du désembuage qui, lui, concerne la face 4. Alors que l'opération de dégivrage se pratique seulement une fois au démarrage du véhicule, à l'arrêt ou à faible vitesse, pendant un temps court de l'ordre de 3 min et uniquement certains jours d'hiver, le désembuage est nécessaire en toute saison et le plus fréquemment quand le véhicule roule. Il en résulte que la fonction désembuage n'est pas une fonction mineure qu'on peut ignorer d'une part, et il en résulte également, d'autre part, que si le véhicule roule, le désembuage de la face interne d'un pare-brise et en général d'un vitrage, déjà d'autant plus difficile que la couche chauffante est située plus loin de cette face interne à désembuer, devient encore plus difficile par le fait que les courants d'air sur la face extérieure, donc les échanges convectifs sur l'extérieur du pare-brise, d'autant plus intenses que le véhicule roule plus vite, atténuent les effets du chauffage de la couche.

Le désembuage est donc très inefficace, pour ne pas dire nul, lorsque le véhicule roule et que la couche chauffante du pare-brise est en face 2. Cela oblige donc, même lorsqu'on a un pare-brise dégivrant à couche chauffante en face 2, à continuer à installer des moyens annexes, à la fois coûteux et inconfortables, de désembuage par soufflage d'air, éventuellement chaud.

Par ailleurs lors du bris du pare-brise par le choc d'un caillou, bien souvent seule la plaque de verre externe du pare-brise est détériorée et si donc la couche conductrice est en face 2, c'est-à-dire sur la face interne de cette plaque de verre brisée, elle sera elle aussi détériorée et la réparation du pare-brise sans démontage, par simple comblement de la fissure du verre externe avec une matière de même indice que le verre, ne réparera pas la couche. La couche ainsi détériorée permettra cependant le plus souvent la conduction électrique, mais seulement dans des zones restreintes et donc avec une intensité plus importante dans ces zones, conduisant à des surchauffes localisées pouvant détruire l'intercalaire plastique en P.V.B. du vitrage feuilleté, le rendre localement non transparent et y créer des défauts perturbant la vision et incompatibles avec la sécurité.

La présente invention vise à fournir des vitrages à couche électro-conductrice pour véhicules et en particulier des pare-brise feuilletés, c'est-à-dire à deux plaques de verre réunies par une feuille intercalaire de matériau transparent thermoplastique du type P.V.B., ne présentant pas les inconvénients des pare-brise feuilletés traditionnels, c'est-à-dire : plus rapidement désembuables, éventuellement réparables lorsque seule la plaque de verre extérieure est fissurée, ne risquant pas d'engendrer des défauts perturbant la vision et mettant en cause la sécurité en cas de bris.

Elle propose pour cela un vitrage feuilleté dans lequel la couche électro-conductrice est en face 3, les faces des plaques de verre du feuilleté étant numérotées comme déjà dit, de 1 à 4 en allant de l'extérieur du véhicule fermé par le vitrage, vers l'intérieur.

Avantageusement, cette couche est une couche fabriquée par une technique de pyrolyse conférant à la couche une solidité renforcée et autorisant son bombage même en face convexe.

Avantageusement encore, cette couche est une couche d'oxyde d'étain indium (ITO) obtenue par pyrolyse de composés en poudre.

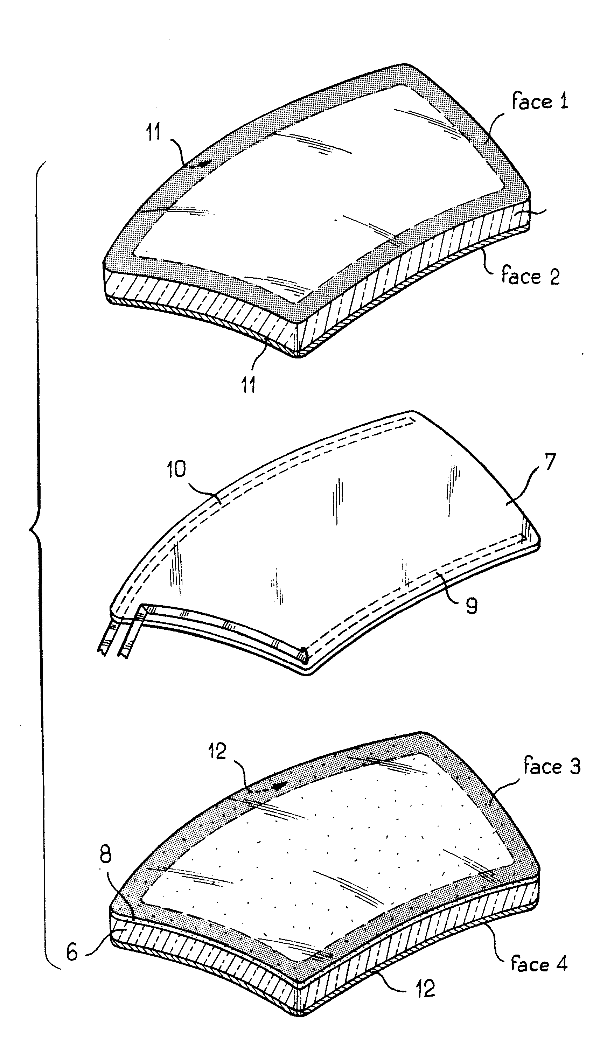

L'invention sera maintenant décrite plus en détail en référence à la figure jointe qui représente en vue éclatée un vitrage feuilleté à deux plaques de verre et à couche électro-conductrice selon l'invention.

Le vitrage de la figure comporte deux plaques de verre 5 et 6, assemblées par feuilletage grâce à une feuille intercalaire de matière thermoplastique transparente 7 du type P.V.B.(polyvinylbutyral), P.U.(polyuréthane) P.V.C. (chlorure de polyvinyle), etc..., adhérant à chacune des deux plaques de verre.

Généralement un tel vitrage pour véhicule est bombé ; c'est en particulier le cas pour un pare-brise, sa face extérieure, c'est-à-dire celle disposée à l'extérieur du véhicule fermé par ledit vitrage étant le plus souvent convexe.

Cependant pour d'autres vitrages de véhicules, en particulier des lunettes arrière, il arrive aussi que la face extérieure soit concave.

L'invention vaut pour les deux types de courbures et plus généralement pour tous les vitrages feuilletés pour véhicules, plats ou ayant n'importe quelle courbure ; toutefois la figure ne montre qu'un vitrage du type pare-brise, à convexité tournée vers l'extérieur.

Les quatre faces des deux plaques de verre 5 et 6 sont, comme déjà dit, numérotées 1,2,3,4 en allant de l'extérieur vers l'intérieur, les faces 2 et 3 étant donc en contact avec la feuille 7 par exemple en P.V.B.

Ce vitrage selon l'invention comporte une couche électro-conductrice 8 en face 3, déposée sur la plaque de verre 6 avant feuilletage. Il s'agit d'une couche métallique (cette expression englobe aussi les couches à base d'oxyde(s) métallique(s) du type à base d'oxyde d'étain ($SnO_2$), d'oxyde d'indium étain (ITO), etc..., et également du type constitué d'un empilement de films parmi lesquels est présent un film métallique (par exemple l'empilement $SnO_2$/Ag/$SnO_2$).

Cette couche est déposée par des techniques traditionnelles : pyrolyse à partir de poudres, solutions ou suspensions, vapeurs, dépôts sous vide (pulvérisation cathodique magnétron, plasma, etc...) procédé par trempage, etc...

La couche 8 disposée en face 3 présente les avantages déjà mentionnés : meilleur désembuage, sauvegarde de la couche et maintien de la vision malgré le bris de la plaque de verre extérieure 5, possibilité de réparer les pare-brise dont, seul, le verre extérieur est fissuré.

Avantageusement, lorsque le vitrage est bombé et même fortement bombé, l'invention propose, en particulier lorsque le bombage est effectué après le dépôt de la couche 8, que la couche soit une couche pyrolysée, c'est-à-dire obtenue par décomposition sous l'effet de la chaleur élevée du substrat, puis oxydation, de composés organo-métalliques et en particulier de composés en poudre.

Il semble en effet que ces couches déposées sur un substrat chaud soient plus solides et en particulier plus aptes que d'autres à être bombées sans détérioration. Parmi ces couches pyrolysées, celles obtenues à partir de composés en poudre présentent une solidité particulièrement exceptionnelle et une capacité à être bombées pratiquement sans précaution tout à fait remarquable.

Parmi ces couches pyrolysées à partir de poudres, citons plus particulièrement les couches à base de $SnO_2$ obtenues par exemple à partir de DBTF (fluorure de dibutyl étain) décrites dans les documents de brevet EP 39256 et EP 125153, et les couches d'oxyde d'étain indium (ITO) obtenues par exemple à partir de formiate d'indium et d'un composé d'étain notamment du DBTO (oxyde de dibutyl étain), ces couches ITO étant par exemple décrites dans les documents de brevet EP 192009 déjà cité et FR 8800131.

L'invention est particulièrement intéressante pour des pare-brise ou vitrages à couche ITO 8 en face 3, d'épaisseur d'au moins environ 180 n.m. pour laquelle l'utilisation en tant que couche chauffante pour véhicule automobile, de couleur convenant au goût de la clientèle, est envisageable. Pour cette épaisseur de 180 n.m., la couche ITO a une résistance par carré de l'ordre de 10 ohms, une couleur en transmission pratiquement neutre, une couleur en réflexion légèrement bleutée.

Avantageusement, parmi les plaques de verre 5 et 6, est présente au moins une plaque de verre teinté dans sa masse, par exemple la plaque 5, exempte de couche 8, de préférence de couleur verdâtre, à propriétés anti-solaire favorisant le confort d'été des véhicules équipés de tels verres. On sait que la couleur verte est très appréciée de la clientèle automobile et l'association couche 8 d'épaisseur de l'ordre de 180 n.m avec verre de teinte verdâtre donne un aspect d'ensemble à tendance verte satisfaisant. La plaque de verre de teinte verte peut être en un verre du type dit "TSA" ou "$TSA^{2+}$" coloré, c'est-à-dire en un verre classique silico-sodo-calcique coloré par des oxydes métalliques de fer et de cobalt introduits suivant des proportions pondérales voisines de :

pour "TSA" $Fe_2O_3$ compris entre 0,55 et 0,62 % FeO compris entre 0,11 et 0,16 % CoO inférieur à 12 ppm et même inférieur à 10 ppm

pour "$TSA^{2+}$" $Fe_2O_3$ compris entre 0,75 et 0,90 % FeO compris entre 0,15 et 0,22 % CoO inférieur à 17 ppm et même de préférence à 10 ppm

Une couleur également satisfaisante, verte, est aussi obtenue pour une épaisseur de couche 8 de l'ordre de 350 -380 n.m. A cette épaisseur la couche elle même est verdâtre en réflexion ; elle possède une résistance par carré de l'ordre de 4,5 ohms, qui permet son utilisation, notamment comme couche chauffante, sur des véhicules en particulier automobiles. Lorsque dans le feuilleté, est présente une plaque de verre 5 et/ou 6 en verre coloré du type "TSA" ou "$TSA^{2+}$", la couleur verte subsiste bien entendu pour l'ensemble du feuilleté.

Les vitrages, et en particulier les vitrages feuilletés à couche 8 pour véhicules, sont maintenant le plus souvent bombés. Le plus souvent le bombage est tel que la face extérieure du vitrage est convexe et donc la couche 8 en face 3 est aussi sur une surface convexe. Lorsque la couche 8 n'est pas une couche pyrolysée, elle peut aussi, malgré sa moindre résistance et sa moindre aptitude au bombage comparée à une couche pyrolysée, en particulier formée à partir de composés en poudre, être malgré tout disposée sur une face convexe ; toutefois il importe alors soit de prendre des précautions au bombage au cours duquel elle est mise en extension, soit de déposer la couche 8 après le bombage du verre.

Pour une couche pyrolysée, en particulier à partir de composés en poudre, telle la couche I.T.O. décrite dans les documents de brevets déjà cités EP 192009 et FR 2625754, le bombage du verre déjà revêtu de sa couche ne pose aucun problème.

Les précautions à prendre pour bomber une couche 8 " fragile" sont par exemple données dans les documents de brevet EP 108616 et FR 8809284.

Moyennant ces précautions pour les couches 8 les plus fragiles, sans précaution particulière pour les couches 8 pyrolysées et notamment celles obtenues à partir de poudres, les couches après bombage peuvent être homogènes avec une résistances électrique homogène sur leur surface entière, quel que soit le sens de la courbure à partir du moment bien sûr où elles ont été déposées de façon homogène pour présenter sensiblement les mêmes caractéristiques sur toute leur surface, sur toute la surface du vitrage, tout du moins dans la zone délimitée par des bandes d'amenée du courant électrique.

Bien entendu des couches non homogènes sur la totalité de la surface du vitrage, ou non déposées sur la totalité de la surface de la surface du vitrage, sont également possibles et appartiennent à l'invention lorsqu'elles sont en face 3.

L'invention propose en particulier des vitrages feuilletés à couche ITO déposée en face 3 sur la plaque de verre 6 en verre clair silico-sodo-calcique d'épaisseur de l'ordre de 1,5 à 3 mm, la couche I.T.0. obtenue de préférence par pyrolyse de poudres, ayant une épaisseur soit de l'ordre de 180 n.m, soit de l'ordre de 350-380 nm, l'autre plaque 5 de verre étant en un verre teinté du type "TSA" d'épaisseur de l'ordre de 1,5 à 3 mm, de couleur verte, par exemple de préférence d'épaisseur de l'ordre de 2 à 2,6 mm.

Des épaisseurs de verre clair et/ou teinté inférieures aux épaisseurs données ci-dessus sont également possibles.

Pour les épaisseurs données, la transmission lumineuse $T_1$ pour l'illuminant A est supérieure à 75 % ou 70 % imposé par les réglementations sur les vitrages automobiles et en outre la transmission énergétique est réduite.

Bien entendu, ainsi qu'il est classique, des amenées de courant 9 et 10 sont prévues pour alimenter électriquement la couche. Il peut s'agir de bandes sérigraphiées à base d'Ag déposées sur la couche 8 elle même, de préférence pour alimenter toute sa surface de façon homogène, disposées avantageusement horizontalement en haut et en bas du pare-brise, c'est-à-dire de façon que la distance entre lesdites bandes d'amenée de courant soit plus faible que si elles étaient disposées dans l'autre sens.

En variante ces bandes 9 et 10 d'amenée de courant sont des clinquants métalliques fixés sur la feuille de P.V.B. par exemple par soudage et plaqués ensuite sur la couche 8 en même temps que le PVB, lors de l'opération de feuilletage.

Ce sont par exemple des clinquants en cuivre étamé d'environ 5 à 10 mm de largeur, de l'ordre du dixième de mm d'épaisseur.

Bien entendu, des dépôts d'émail 11 et 12 sont également prévus à la périphérie du vitrage, pour masquer à la fois de l'intérieur et de l'extérieur les bandes 9 et 10 d'amenée de courant et aussi pour protéger la colle servant à fixer le pare-brise dans sa baie, lui évitant ainsi d'être dégradée par le soleil.

Ces dépôts sont généralement faits à la périphérie des faces 4 et 2 avant bombage et feuilletage. L'emploi de clinquants métalliques pour amener le courant électrique évite les difficultés de transport et en général de manipulation au cours du processus de fabrication d'une plaque de verre 6 qui porterait d'un côté un dépôt d'émail 12 et de l'autre des bandes sérigraphiées 9 et 10, ce dépôt 12 et ces bandes 9 et 10 étant fragiles avant cuisson.

Dans le cas où les amenées de courant sont des bandes sérigraphiées, il importe donc de prendre des précautions de manipulation et/ou de réaliser et recuire séparément les bandes et les dépôts disposés sur des faces différentes d'une même plaque.

Ainsi, le vitrage feuilleté selon l'invention avec couche électro-conductrice en face 3 fonctionne beaucoup mieux qu'un vitrage avec couche en face 2 pour ce qui concerne le désembuage ; il autorise les réparations de pare-brise dont, seule, la plaque de verre extérieure est fissurée ; il permet cependant un dégivrage efficace.

En outre, le positionnement de la couche électro-conductrice en face 3 permet d'obtenir un vitrage de meilleur aspect que si elle était en face 2. En effet, avec la couche en face 2, le dépôt d'émail périphérique sur la plaque de verre 5 est fait sur la couche elle-même, si bien que sur ses bords ladite couche est vue de l'extérieur sur fond d'émail, généralement noir, ce qui fait ressortir sur lesdits bords, sa teinte par exemple verdâtre, de façon plus accentuée qu'ailleurs et ces différentes nuances de teinte nuisent à l'esthétisme du vitrage. En effet également quand la couche est en face 2 et que les bandes d'amenée de courant sont sérigraphiées, à l'inconvénient développé ci-dessus, s'ajoute l'impossibilité de les masquer totalement. En effet, pour des raisons de mauvaise adhérence l'un sur l'autre, les dépôts d'émail et les bandes d'amenée de courant ne peuvent pas se chevaucher exactement, mais doivent au contraire déborder légèrement l'un de l'autre pour pouvoir s'accrocher, au moins par une partie de leur largeur, sur la couche électro-conductrice. Il en résulte donc que les bandes d'amenée de courant restent partiellement visibles.

Un tel pare-brise autorise la suppression des moyens de désembuage classiques par ventilation, qui sont à la fois coûteux à réaliser et inconfortables à utiliser, la couche en face 3 pouvant remplir les deux fonctions désembuage et dégivrage.

Bien entendu d'autres fonctions non indiquées précédemment, mais que peut jouer une couche électroconductrice, à savoir fonction antenne, fonction récepteur I.R., fonction alarme, etc..., bien connues, peuvent être remplies également que la couche soit en face 2 ou 3.

L'invention a proposé des épaisseurs particulières de couche I.T.O., environ 180 n.m. et 350-380 n.m., ces épaisseurs conduisant à des couleurs actuellement appréciées de la clientèle automobile d'une part, autorisant des chauffages satisfaisants d'autre part. Toutefois, la disposition en face 3 de couches autres qu' I.T.O. et/ou en épaisseurs différentes, reste bien entendu possible et du domaine de l'invention ; les couleurs sont alors certes différentes, mais tous les avantages associés à la disposition en face 3 subsistent.

**Revendications**

1. Vitrage feuilleté à deux plaques de verre (5 et 6), réunies par un intercalaire (7) transparent en matériau thermoplastique du type P.V.B, P.U, P.V.C., et comprenant une couche électroconductrice (8) déposée sur une des faces d'une des plaques de verre, caractérisé en ce que cette couche est disposée en face 3, les quatre faces des deux plaques de verre étant numérotées conventionnellement 1,2,3,4 en allant de l'extérieur vers l'intérieur d'un véhicule sur lequel ledit vitrage est monté.

2. Vitrage selon la revendication 1, caractérisé en ce que la couche (8) est disposée sur une face convexe.

3. Vitrage selon la revendication 1 ou 2, caractérisé en ce que la couche est une couche pyrolysée.

4. Vitrage selon la revendication 3 caractérisé en ce que la couche est obtenue à partir de poudres.

5. Vitrage selon l'une des revendications 1 à 4, caractérisé en ce que la couche est une couche I.T.O., notamment obtenue à partir de formiate d'indium et d'un composé d'étain, en particulier D.B.T.O.

6. Vitrage selon l'une des revendications 1 à 5, caractérisé en ce que la couche (8) est déposée avant bombage.

7. Vitrage selon l'une des revendications 1 à 6, caractérisé en ce que sa couleur générale est verdâtre.

8. Vitrage selon l'une des revendications 1 à 7, caractérisé en ce qu'il comporte une plaque de verre (6) silico-sodo-calcique clair d'épaisseur d'environ 1,5 à 3 mm portant la couche (8) sur une face, et d'une plaque de verre (5) en verre teinté antisolaire d'épaisseur de l'ordre de 1,5 à 3 mm, du type "TSA" ou "TSA$^{2+}$"

9. Vitrage selon la revendication 8 caractérisé en ce que la plaque de verre (5) en verre teinté est verdâtre.

10. Vitrage selon l'une des revendications 1 à 9, caractérisé en ce que la couche électroconductrice a une épaisseur de l'ordre de 180 n.m.

11. Vitrage selon l'une des revendications 1 à 9 caractérisé en ce que la couche a une épaisseur de l'ordre de 350 -380 n.m.

12. Vitrage selon l'une des revendications 1 à 11, caractérisé en ce qu'il comprend, en outre, des moyens d'amenée du courant pour alimenter électriquement la couche électroconductrice.

13. Vitrage selon la revendication 12, caractérisé en ce que les moyens d'amenée du courant sont des clinquants métalliques mis en contact avec la couche électroconductrice lors du feuilletage.

14. Vitrage selon l'une des revendications 1 à 13, caractérisé en ce que des dépôts d'émail sont faits en périphérie, notamment des faces 2 et 4, pour masquer totalement les amenées de courant.

15. Application du vitrage selon l'une des revendications 1 à 14 en tant que vitrage chauffant et en particulier pare-brise pour véhicule, à la fois dégivrant et désembuant.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 108 616  (DONNELLY MIRRORS) <br> * Page 7, lignes 14-19; page 16, ligne 24, - page 17, ligne 16; page 19, ligne 31, - page 20, ligne 2; page 20, lignes 21-29; page 23, ligne 20, - page 24, ligne 8 * | 1,2 | B 32 B   17/10 <br> C 03 C   27/12 |
| A | | 3-6,9 | |
| | --- | | |
| Y | US-A-4 057 671  (G.W. SHOOP) <br> * Colonne 5, lignes 10-25; colonne 5, ligne 57, - colonne 6, ligne 17 * | 1,2 | |
| | --- | | |
| A | US-A-4 655 811  (L.E. BITTER) <br> * Résumé; colonne 1, lignes 15-18; colonne 2, lignes 58-68; colonne 3, ligne 59, - colonne 4, ligne 3; colonne 4, lignes 26-44 * | 1,15 | |
| | --- | | |
| A | LU-A-  35 384  (LIBBEY-OWENS-FORD) <br> * Figures 4,5; page 7, alinéa 2 * | 13,14 | |
| | --- | | **DOMAINES TECHNIQUES RECHERCHES (Int. Cl.5)** |
| A | EP-A-0 274 914  (FORD MOTOR CO. LTD) <br> * Revendications * | 13,14 | B 32 B <br> C 03 C |
| | ----- | | |

Le présent rapport a été établi pour toutes les revendications

| Lieu de la recherche | Date d'achèvement de la recherche | Examinateur |
|---|---|---|
| LA HAYE | 08-11-1989 | VAN BELLEGHEM W.R. |